# EUROPEAN PATENT APPLICATION

(11) **EP 1 468 969 A1**
(43) Date of publication of application: **20.10.2004**
(21) Application number: 03425231.2
(22) Date of filing: 14.04.2003
(51) Int. Cl.: C03B 5/43, C03B 5/435, C03B 5/44, C03B 7/02, C03B 7/06, F27D 1/02

(54) **Cover-block for the working end and for the forehearths feeding the fused glass**

(71) Applicant: S.I.G.M.A. S.r.l., 22070 Locate Varesino (Como) (IT)
(72) Inventor: Mari, Roberto, 22070 Locate Varesino, Como (IT)
(74) Representative: Lecce, Giovanni

(57) **Abstract**

**SUMMARY**

A cover-block (10) for the working end and for the forehearths feeding the fused glass, particularly suitable for the control of the heat removal, comprising a refractory material body (12) provided with longitudinal internal ducts (14,16,18) placed alongside and in a parallel way among them, at least some of them (14,18) are open and in communication with the internal part of said working end and of said forehearths for the passage of the air or burned glasses.

## Description

### Field of the invention

The present invention refers to a cover-block for the working end and for the forehearths feeding the fused glass.

More particularly, the present invention refers to a cover-block for the working end and for the forehearths feeding the fused glass that is especially suitable for the heat removal control.

### Description of the prior art

It is known that the glass working for the production of the hollow items includes the following steps:
- Heating and melting of the glass or of its components in a homogeneous blend in a furnace;
- Refining of the fused glass at a higher temperature than the melting one in order to remove gaseous decomposition and dehydration products and the bubbles they formed;
- Creation of sized fused glass gobs
- Feeding of the mould with these gobs and
- Forming of the hollow item through blow, press or a press-blow combination.

The melting and the refining processes are carried out in furnaces of the crucible or tank kind at the highest and most homogeneous temperatures in order to favour the melting and refining processes.

From the throat of the furnace, the melted and refined mass is carried through the working end and then through the forehearths to feeders from which sized fused glass gobs to be used in the forming process are taken out to form the hollow item. On the way of the fused glass from the throat of the furnace to the feeders, the main task of the working end and of the forehearths consists in guaranteeing the glass the right and homogenous temperature for the forming of the gob.

Therefore both the working end and the forehearths act as heat exchangers making use of the additional support of the combustion system, of the cooling air and of radiant areas as openings for the discharge of the exceeding heat.

For the building of the working end and of the forehearths a refractory material that can tolerate harsh thermal conditions is generally used.

The cover of the working end and of the forehearths is formed by big monolithic blocks or by many pieces having a high weight and a shape according to the operation principle, the glass kind and the particular technology that is used.

The various kinds of conditioning principles of the glass are usually the following ones:
- Direct cooling obtained by the air that is blown into the forehearth in direct contact with the fused glass;
- Indirect cooling obtained by the air that is blown outside the fore hearth which is not in direct contact with the fused glass through ducts that are placed over the cover-block in a central and/or side position; or
- Radiation cooling wherein the air is not blown and the cooling is obtained by openings placed on the cover-block of the working end and of the forehearths that are completely or partially opened according to the quantity of heat to be removed.

In all these kinds of cooling, the burned gas or air removal is carried out through chimneys placed over the cover-block.

Each conditioning requires particular thermal working conditions with different times according to the production type.

This means very long downtimes for production change that greatly affect on the cost of the finished product.

Moreover different kinds of cover-blocks are necessary in order to carry out the various conditionings required by the technology.

### Object of the invention

Object of the present invention is to remove the above-mentioned drawbacks.

More particularly, object of the present invention is the provision of a cover-block that can be used without distinction with the direct and indirect cooling.

A further object of the present invention is the provision of a cover-block that can be indifferently used with direct and indirect cooling and also improves the glass conditioning efficiency, reduces the downtimes for production change and allows obtaining a great power saving.

In a more general aspect, these and other purposes resulting from the following description can be obtained by the present invention reducing the refractory mass forming the cover-block.

The reduction of the refractory mass can be obtained providing the cover-block with longitudinal internal ducts that can be closed and are not in communication with the internal part of the working end and of the forehearths or with open ducts in communication with the internal part of the working end and of the forehearths for the passage of the air or of the burned gases.

Some ducts are preferably closed and others are open or they can be opened.

Therefore, object of the present invention is a cover-block for the working end and for the forehearths feeding the fused glass that is particularly suitable for the control of the heat removal, comprising a refractory material body provided with internal longitudinal ducts, at least some of said ducts are open and in communication with the internal part of said working end and forehearths for the passage of air or burned gases.

Said internal ducts can be laterally and/or centrally positioned with respect to the cover-block and can have any shape, size or section.

The cover-block of the present invention can have any shape and section, such as a rectangular, square, triangular, semicircular shape, a straight or a curved one and it can be obtained in one piece or in more pieces that are subsequently assembled and stuck among them. Any known kind of adhesive product or mixture that is resistant to the operating temperatures of the working end and of the forehearths feeding the fused glass can be used to assemble the pieces.

Thanks to the lightening obtained creating the internal ducts, some of them can also be used for passage of the cooling air, a slight reduction of the refractory cover-block weight is obtained and therefore a reduction of the mass that turns into a lower quantity of gas or air required for the change of the cover-block temperature and of the underlying glass.

In this way, for example, during the heating steps a power saving is obtained or a reduction in downtimes for the reset of the optimum thermal conditions for the forming of the glass gob during the production and/or item changes.

The air or burned gas pass-through ducts inside the cover-block in communication with the internal part of the forehearths through chimney holes create the conditions to move the hot gas removals or to increase the pass-through of the cooling air only where it is actually required i.e.: to the centre, to the left and/or to the right, or in a combined way i.e.: simultaneously to the centre and to the left, simultaneously to the centre and to the right, simultaneously to the left and to the right, simultaneously to the centre, to the right and to the left.

In practice, thanks to this manufacturing solution, the air can be exactly blown where it is required, the hot points of the system can be checked and their moving inside the working end in the areas where an effective forced cooling and/or heating is required can be determined.

Consequently, the thermal operation of the system can be managed in an easier and more accurate way than any other solution.

The increase in the homogeneity of the glass that can be obtained thanks to the control of the heat removal by the cover-block of the present invention is very high and consequently a reduction of rejections due to the non-homogeneous glass gob or an increase in the production speed of the item can be obtained.

Moreover, the cover-block of the present invention allows to carry out changes in the glass temperature in very short times, thanks to the reduction of the thermal mass of the refractory materials and to obtain a considerable power saving; these advantages are not secondary for the glass industry.

### Short description of the drawings

The manufacturing and functional features of the cover-block of the present invention can be better understood from the following description wherein reference is made to the figures of the enclosed drawings that represent some embodiments that are given by way of illustrative and non-limitative example wherein:

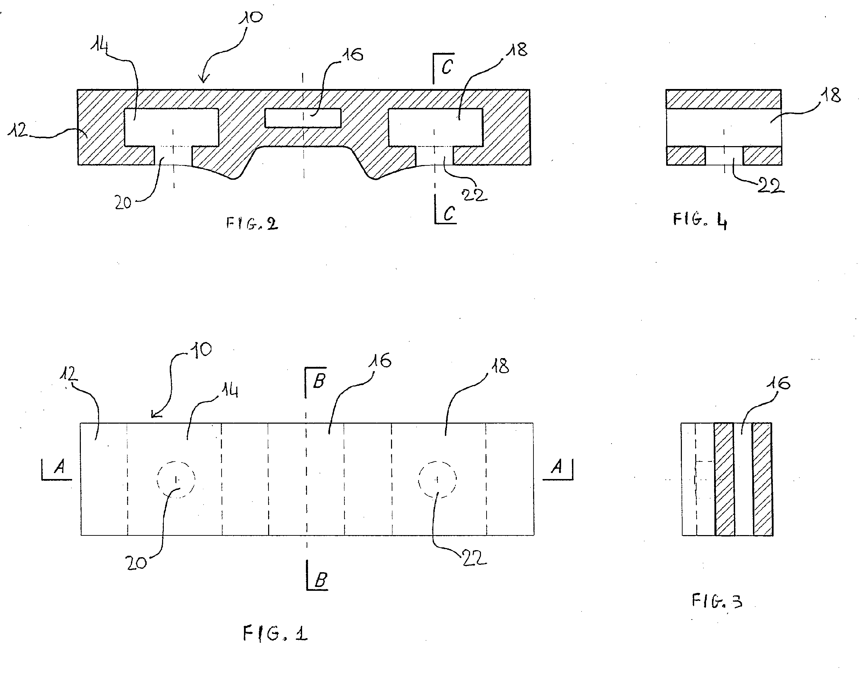

Figure 1 is a top schematic view of the cover-block of the present invention;
Figure 2 is a schematic view of a cross section of the cover-block of Figure 1, obtained by a pass-through plan along the line A-A of said figure;
Figure 3 is a schematic view of a cross section of the cover-block of the previous figures, obtained by a pass-through plan along the line B-B of Figure 1 and
Figure 4 is a schematic view of a cross section of the cover-block of the previous figures, obtained by a pass-through plan along the line C-C of Figure 2.

### Description of the preferred embodiment

With particular reference to the figures, the cover-block of the present invention, marked in its whole with 10, comprises a refractory material body 12, preferably with a substantially rectangular section, provided with longitudinal internal ducts placed side by side and in a parallel way among them 14, 16, 18. One 16 of said internal ducts is placed on the central part and two 14, 18 of them are placed on the relevant sides of said body 12. In the figures three ducts are shown, but they can be in a higher or lower number according to the sizes of the body 12 and of the required cooling level.

The ducts 14, 16, 18 extend along the whole surface of the working end or of the feeding forehearth and they can have any shape and/or section, a rectangular, square, triangular, polygonal, circular, semicircular one, etc. Said ducts can be open and in communication with the internal part of the working end or of the feeding forehearths by chimney holes 20, 22 or they can be closed. The chimney holes 20, 22 can be placed all along the length of the open ducts 14, 18 in a continuous or discontinuous way and they can be regularly or irregularly spaced. Moreover, the chimney holes 20, 22 can be closed by a refractory material foil.

The central duct 16 is preferably closed and the side ones 14 and 18 are preferably open and provided with chimney holes 20, 22.

The presence of longitudinal ducts allows a great reduction of the refractory mass of the cover-block thus considerably helping the cooling, heating and homogenisation speed of temperatures thus diminishing the stresses due to the thermal expansion of the material.

The presence of chimney holes allows the ventilation inside the forehearth or the working end thus creating a chimney effect.

The results obtained by the cover-block of the present invention are a homogenisation of the glass gob, an increase in the production speed, a great reduction of the working rejections and of the downtimes for production change with a considerable power saving.

Even though the present invention has been described with reference to an embodiment that is given only by way of non-limitative example, some changes and variants will be clear to a technician skilled in the art according to the above-mentioned description. It is therefore clear that the present invention is meant to include all the changes and variants falling within the spirit and the protection scope of the appended claims.

## Claims

1. A cover-block for the working end and for the forehearths feeding the fused glass, particularly suitable for the control of the heat removal, comprising a refractory material body (12), **characterized in that** said body (12) is provided with longitudinal internal ducts (14,16,18) at least some of said ducts (14,18) are open and in communication with the internal part of said working end and of said forehearths for the passage of air or burned gases.

2. The cover-block according to the claim 1, **characterized in that** the ducts (14, 16, 18) are laterally or centrally positioned.

3. The cover-block according to claim 1, **characterized in that** the ducts (14, 16, 18) are laterally and centrally positioned.

4. The cover-block according to any of the previous claims, **characterized in that** the ducts (14,16,18) are placed alongside and in a parallel way among them.

5. The cover-block according to any of the previous claims, **characterized in that** the ducts (14, 16,18) have a rectangular, square, triangular, polygonal, circular or semicircular section.

6. The cover-block according to any of the previous claims, **characterized in that** the open ducts (14, 18) are provided with chimney holes (20, 22) in communication with the internal part of the working end or of the feeding forehearths.

7. The cover-block according to claim 6, **characterized in that** the chimney holes (20, 22) are placed all along the length of the open duct (14, 18) in a continuous or discontinuous way.

8. The cover-block according to claim 6, **characterized in that** the chimney holes (20, 22) are placed all along the length of the open duct (14, 18) and they can be regularly or irregularly spaced.

9. The cover-block according to any of the previous claims, **characterized in that** the central duct (16) is closed and the side ones (14, 18) are open and provided with chimney holes (20, 22).

10. The cover-block according to any of the previous claims, **characterized in that** it is made of more pieces that are subsequently assembled and stuck among them.
